# EUROPEAN PATENT APPLICATION

(11) **EP 2 801 253 A2**
(43) Date of publication of application: **12.11.2014**
(21) Application number: 13192059.7
(22) Date of filing: 08.11.2013
(51) Int. Cl.: A01K 5/01

(54) **Pet animal bowl**

(30) Priority: 06.05.2013 IN DE13382013
(71) Applicant: Jain, Neeraj, Delhi 110 052 (IN)
(72) Inventor: Jain, Neeraj, Delhi 110 052 (IN)
(74) Representative: Ottazzo, Marco Francesco Agostino

(57) **Abstract**

The present invention relates to a pet animal bowl comprising a metallic container (1) covered with non-metallic first layer (2) and a second layer (3). The first layer and second layer are separable from each other as well as from the container. This separability allows ease of cleaning and maintenance of hygiene.

## Description

**Technical field:** The present invention generally relates to pet animal feeding and drinking bowls and in particularly, relates to layered animal bowls with separable layers for ease of cleaning and maintenance.

**Background and prior art:** Bowls for feeding animals are well known in the art. Typically these bowls comprise a single bowl (for example, GB 2433418, CH 404127, US 5979361) or multiple layered bowls (US 5579946, US 2005/109779, WO02/10024, US 2003/0033986, US 5372274) or sometimes single bowls or multiple bowls having anti-skid features (US 7600486, US 5979361, US 8342350) to avoid movement of the bowls when the pet animals are feeding from it. However, it has been noticed that single layered bowls typically pose a problem to the pet feeder who may find it difficult to hold the hot bowls. Most double layered bowls utilize a metallic innermost layer whereas the outermost layer is non-metallic in nature. Typically the double layered bowls pose a problem that they are often too heavy for the pet owner to carry reducing their advantages of portability In some cases, the layers of the bowls being inseparable makes cleaning and maintenance of hygiene of the bowls difficult and tedious for the pet owners and managers. Thus, the inventor endeavors to provide a pet bowl having removable layers to overcome the abovementioned shortcomings in the prior art.

**Summary of the Invention:** The present invention relates to a pet animal bowl comprising a metallic container covered with non-metallic first layer and a second layer. The first layer and second layer are separable from each other as well as from the container. This separability allows ease of cleaning and maintenance of hygiene.

**Brief Description of the Drawings:** A full understanding of the invention can be gained from the following description of the preferred embodiments when read in conjunction with the accompanying drawings in which:
Figure 1 illustrates a perspective view of the pet animal feeding bowl of the present invention.
Figure 2 shows a side view of pet animal bowl of the present invention.
Figure 3 shows a bottom view of pet animal bowl of the present invention.
Figure 4 depicts the bottom view of pet animal bowl of the present invention with first layer being removed from the container with the second layer still attached thereto.
Figure 5 illustrate bottom view of pet animal bowl of the present invention with first layer being attached to the container and the second layer being removed therefrom
Figure 6 depicts the top view of the pet animal feeding bowl of the present invention with both first and second layer being separated from each other and from the container.
Figure 7 illustrates an alternate embodiment of the present invention depicting the bottom view of the container with a groove on its outer side wall for receiving the first layer to form an interference fit.
Figure 8 illustrates the side view of the container of figure 7 showing the relative arrangement of the container, first layer and second layer of pet animal bowl.
Figure 9 illustrates another alternate embodiment of the present invention in which the container comprises a groove on its outer side wall for receiving the first layer, the first layer being locked with the container by means of a ring.

**Detailed Description of the Invention:** In the following detailed description, reference numerals are used to identify structural elements, portions of elements, surfaces and areas in the drawings. It should be understood that like reference numerals are intended to identify same structural elements, portions, or surfaces consistently throughout the several drawing figures, as such elements, portions or surfaces may be further described or explained by the entire written specification.

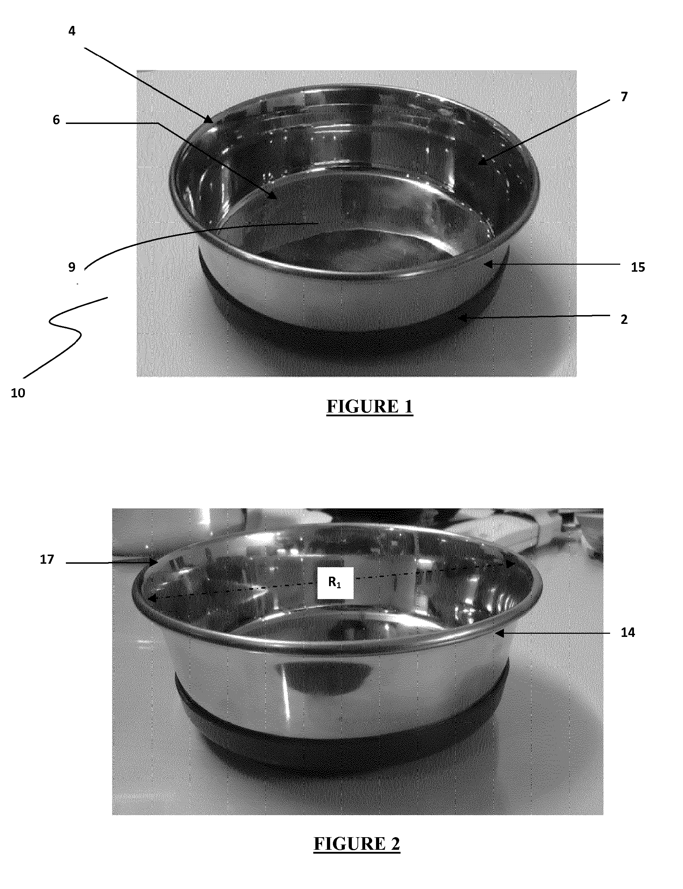

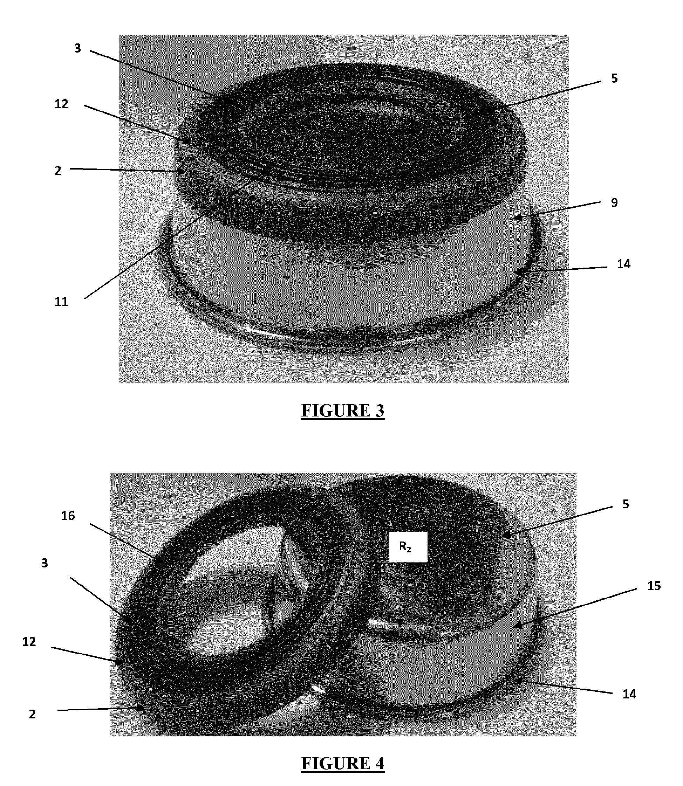

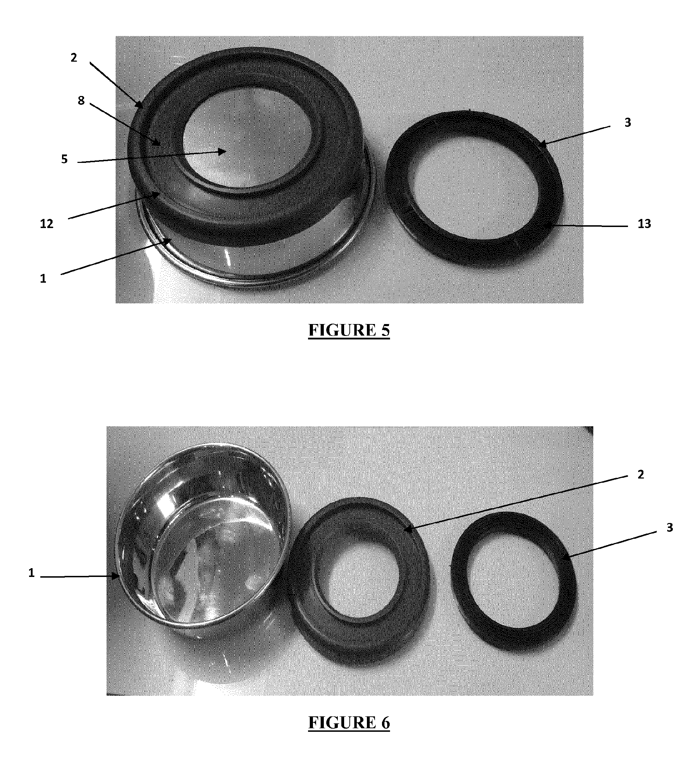

The detailed description provided hereinafter is for an embodiment having one pet animal bowl being used as a single bowl. An embodiment where the multiple such bowls being placed in a supporting stand is also envisaged by the present invention. As can be seen from **figures 1-9****,** a pet animal bowl **(10)** for feeding and drinking of pet animal, said bowl comprising a container **(1)** configured to hold food and/or water for the pet animal; a first layer **(2)** covering at least a portion of container **(1),** said first layer being formed of a material having insulative properties to provide insulation to the contents of the container and reduces conduction of heat or cold form the container to the environment; a second layer **(3)** cover at least a portion of the first layer **(2),** said second layer having anti-skid properties and capable of providing frictional resistance to the bowl **(10)** so as to substantially reduce slipping and/or sliding along a floor or other surface upon which the bowl is placed. The first layer **(2)** and the second layer **(3)** are configured to be separable from each other and from the container **(1),** said separability providing ease of handling, cleaning and maintenance to the pet owner or pet manager.

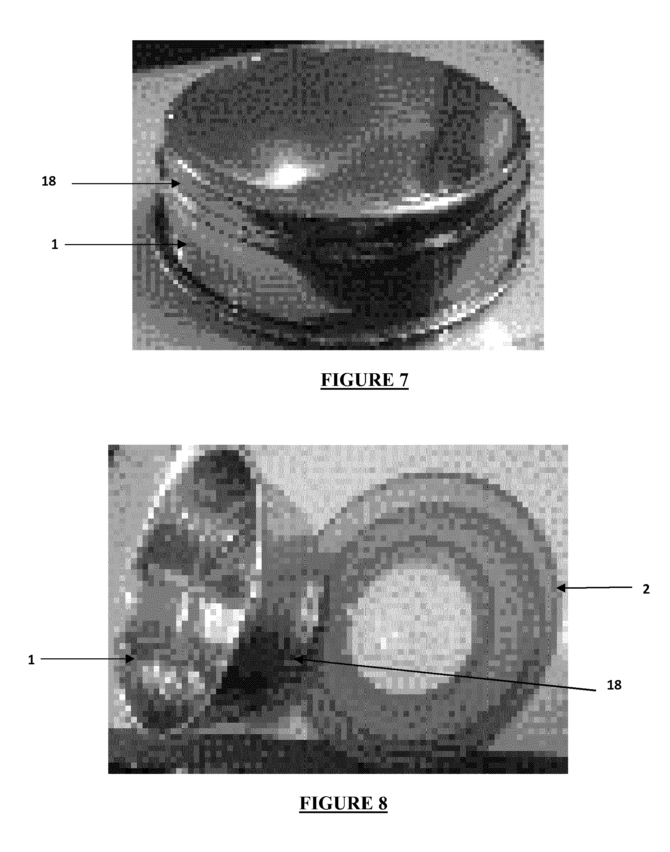

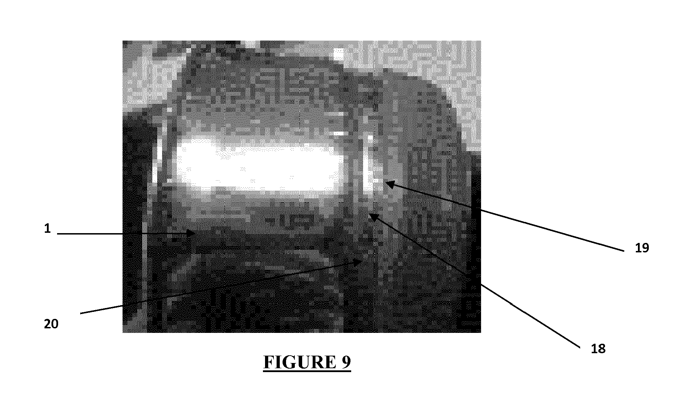

The container **(1)** is of any suitable shape and preferably circular, oval, elliptical, three- to eight-sided shaped figures such that each side of the container has rounded edges. The container comprises a base section **(6)** including a cylindrical upstanding sidewall **(7)** defining a food/water holding reservoir **(9),** the top edge **(14)** of the side wall has an out-turned rim **(4).** The container is made up of any suitable metallic material selected from stainless steel, brass, copper, tin and aluminum.
The first layer **(2)** covers the outer bottom portion **(5)** and outer side walls **(15)** of the container **(1),** said first layer **(2)** covering the side walls from outer bottom portion **(5)** to the top edge **(14)** of the container **(1)** such that the out-turned rim **(4)** lies over the first layer. In an alternate embodiment, the first layer covers the container **(1)** on the outer bottom portion **(5)** and at least a portion of the outer side walls **(15)** of the container **(1)** to the extent that first layer **(2)** grips the outer side wall **(15)** of the container. In this alternate embodiment, the first layer **(2)** does not cover the outer side wall **(15)** up to the top edge **(14)** but only covers a portion thereof. In another alternate embodiment depicted in figure **7** and **8****,** the container **(1)** may be provided with a groove **(18)** on its outer side walls **(15)** configured to receive the first layer **(2)** through an interference fit. In yet another alternate embodiment depicted in figure **9****,** the first layer comprises a step **(19)** for interfacing the groove **(18),** said interfacing surface configured to receive a ring **(20)** for locking the first layer **(2)** with the container **(1).** The amount of raw material necessary to manufacture said first layer **(2)** of this alternate embodiment is reduced. This reduced requirement not only reduces the costs of manufacturing substantially but also reduces production time in making the said layer and assembling the said pet animal bowl **(10).**

The layer **(2)** is formed having a decorative colour. The first layer **(2)** is a continuous layer covering fully the outer bottom portion **(5)** of the container. In an alternate embodiment, the first layer **(2)** partially covers the outer bottom portion **(5)** of the container **(1)** allowing at least a part of the outer bottom **(5)** of the container **(1)** to be visible. The layer **(2)** is dimensioned in size and shape to form interference fit with the outer bottom **(5)** and side portion **(15)** of the container. The layer **(2)** is made up on a non-metallic material such as melamine or plastic. It is understood that fitting of first layer **(2)** on the container **(1)** increases the ground clearance of the container. Therefore the thickness and height of the first layer **(2)** can be increased depending on the product specification and customer requirement. Preferably the radius **(R₁)** of the base portion **(6)** is smaller than the radius **(R₂)** of the open top end **(17)**

The first layer **(2)** comprises on its outer surface **(12)** at least one continuous channel **(8),** each channel configured to receive at least a part of the second layer **(3).** In an alternate embodiment, the first layer **(2)** comprises on its outer surface **(12)** at least one discontinuous channel each channel configured to received at least a part of the second layer **(3).** The channel **(8)** receives the inner surface **(13)** of the second layer **(3).**

The second layer **(3)** is made up on an elastomeric material configured to provide frictional forces against sliding and slipping to surface on which the bowl is placed. The second layer **(3)** comprises at least one ridge **(11)** on its outer surface **(16)** providing additional frictional forces to the surfaces on which the bowl is placed. Alternately, the second layer **(5)** may comprise multiple ridges arranged concentrically on its outer surface **(16).** Preferably the outer surface **(16)** of the second layer is flush with the outer surface **(12)** of first layer such that the ridges **(11)** extend vertically upwards from the outer surface **(16).**

Advantageously, the pet animal bowl of the present invention is a layered bowl in which each layer can be separated from each other as well the container allowing ease of handling, cleaning and maintenance. Bacterial growth which is very rampant in animal bowls due to improper cleaning is totally avoided in the bowls of the present invention enabling the pet owner/manager to feed pets in hygienic manner. At the same time, cleaning of pet bowls does not become a daunting and tedious task for the pet owner/manager. Inclusion of the elastomeric second layer prevents slipping of bowls on which surface the bowl is kept. This not only prevents spillage of food/water but allows the pet to finish a complete meal, prevents scratches on the surface on which the bowl is kept while feeding the animal and prevents unnecessary clanking noise created due to shifting of bowls while the pet animal is feeding from it.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

## Claims

1. A pet animal bowl **(10)** for feeding and drinking of pet animal, said bowl comprising -
a. a container **(1)** made up of a metallic material is configured to hold food and water for the pet animal
b. a first layer **(2)** covering at least a portion of container **(1),** said first layer being formed of a material having insulative properties to provide insulation to the contents of the container and reduces conduction of heat or cold form the container to the environment
c. a second layer **(3)** cover at least a portion of the first layer **(2),** said second layer having anti-skid properties and capable of providing frictional resistance to the bowl **(10)** so as to substantially reduce slipping and/or sliding along a floor or other surface upon which the bowl is placed.

2. The pet animal bowl **(10)** as claimed in claim 1 wherein the first layer **(2)** and the second layer **(3)** are configured to be separable from each other and from the container **(1),** said separability providing ease of handling, cleaning and maintenance to the pet owner or pet manager.

3. The pet animal bowl **(10)** as claimed in any of the preceding claims wherein said container **(1)** is of any suitable shape and preferably circular, oval, elliptical, three- to eight-sided shaped figures such that each side of the container has rounded edges.

4. The pet animal bowl **(10)** as claimed in any of the preceding claims wherein the container comprises a base section **(6)** including a cylindrical upstanding sidewall **(7)** defining a food/water holding reservoir **(9),** the top edge **(14)** of the side wall has a out-turned rim **(4).**

5. The pet animal bowl **(10)** as claimed in any of the preceding claims wherein the first layer **(2)** is formed having a decorative colour.

6. The pet animal bowl **(10)** as claimed in any of the preceding claims wherein the first layer **(2)** covers the outer bottom portion **(5)** and outer side walls **(15)** of the container **(1),** said first layer **(2)** covering the side walls from outer bottom portion **(5)** to the top edge **(14)** of the container **(1)** such that the out-turned rim **(4)** lies over the first layer.

7. The pet animal bowl **(10)** as claimed in claim 5 wherein the first layer covers the container **(1)** on the outer bottom portion **(5)** and at least a portion of the outer side walls **(15)** of the container **(1)** to the extent that first layer **(2)** grips the outer side wall **(15)** of the container.

8. The pet animal bowl (10) as claimed in claim 7 wherein the container (1) comprises a groove (2) on its outer side wall (15) configured to receive the first layer (2) for engaging the first layer (2) with the container (1) by an interference fit.

9. The pet animal bowl (10) as claimed in claim 8 wherein the first layer (2) comprises a step (19) for interfacing the groove **(18),** said interfacing surface configured to receive a ring **(20)** for locking the first layer **(2)** with the container **(1).**

10. The pet animal bowl **(10)** as claimed in claim 6 and 9 wherein the first layer **(2)** partially covers the outer bottom portion **(5)** of the container **(1)** allowing at least a part of the outer bottom **(5)** of the container **(1)** to be visible.

11. The pet animal bowl **(10)** as claimed in claims 7 and 10 wherein the amount of raw material necessary for manufacture of first layer **(2)** is substantially reduced thereby providing significant economic benefits to the manufacturer of said bowl.

12. The pet animal bowl **(10)** as claimed in claim 6 and 9 wherein the first layer **(2)** is a continuous layer covering fully the outer bottom portion **(5)** of the container.

13. The pet animal bowl **(10)** as claimed in claim 11 and 12 wherein the first layer **(2)** is dimensioned in size and shape to form interference fit with the outer bottom **(5)** and side portion **(15)** of the container.

14. The pet animal bowl **(10)** as claimed in claim 13 wherein the first layer **(2)** is made up on a non-metallic material.

15. The pet animal bowl **(10)** as claimed in claim 14 wherein the first layer **(2)** comprises on its outer surface **(12)** at least one continuous channel **(8),** each channel configured to receive at least a part of the second layer **(3).**

16. The pet animal bowl **(10)** as claimed in claim 13 wherein the first layer **(2)** comprises on its outer surface **(12)** at least one discontinuous channel each channel configured to received at least a part of the second layer **(3).**

17. The pet animal bowl **(10)** as claimed in claim 15 and 16 wherein the channel **(8)** interfaces with inner surface **(13)** of the second layer **(3).**

18. The pet animal bowl **(10)** as claimed claim 17 wherein the second layer **(3)** is made up on an elastomeric material configured to provide frictional forces against sliding and slipping to surface on which the bowl is placed.

19. The pet animal bowl **(10)** as claimed in claim 18 wherein the second layer **(3)** comprises at least one ridge **(11)** on its outer surface **(16)** providing additional frictional forces to the surfaces on which the bowl is placed.

20. The pet animal bowl **(10)** as claimed in claim 18 wherein the second layer **(5)** comprises multiple ridges arranged concentrically on its outer surface **(16).**

21. The pet animal bowl **(10)** as claimed in claims 19 and 20 wherein the outer surface **(16)** of the second layer is flush with the outer surface **(12)** of first layer such that the ridges **(11)** extend vertically upwards from the outer surface **(16).**
